# EUROPEAN PATENT APPLICATION

(11) **EP 1 278 148 A1**
(43) Date of publication of application: **22.01.2003**
(21) Application number: 02077777.7
(22) Date of filing: 08.07.2002
(51) Int. Cl.: G06F 17/60

(54) **Method for creating a workflow**

(30) Priority: 19.07.2001 EP 01202762
(71) Applicant: Océ-Technologies B.V., 5914 CC Venlo (NL)
(72) Inventor: Dortmans, Henricus Michiel Johannes Maria, 5981 EP Panningen (NL)
(74) Representative: Van de Sande, J.H.A.W.

(57) **Abstract**

A method for creating a workflow comprising at least one structured process, with interdependent tasks, and a composite object, e.g. a report or manual, involved in the process, comprises steps of
- defining a model of the object, describing the composite object as an aggregate of constituent elements, wherein each element is an instance of an element type;
- creating a general workflow by modelling the process as a structured graph comprising tasks with an associated element type, connected according to their dependencies;
- associating tasks with elements according to their type to create a specific workflow. The method comprises rearranging the tasks on the basis of the associated element type to increase the number of parallel task-element combinations in the specific workflow. A programmable processing device comprises means for automatically generating a workflow and means for operation by one or more users. The device uses the above-described method. A computer program product can be run on a computer to execute the method and automatically create a workflow.

## Description

The invention relates to a method for creating a workflow comprising at least one structured process, with interdependent tasks, and a composite object, e.g. a report or manual, involved in the process, wherein the method comprises the steps of:
- defining a model of the object, describing the composite object as an aggregate of constituent elements, wherein each element is an instance of an element type;
- creating a general workflow by modelling the process as a structured graph comprising tasks with an associated element type, connected according to their dependencies;
- associating tasks with elements according to their type, to create a specific workflow.

The invention further relates to a programmable processing device, comprising means for automatically generating a workflow and means for operation by one or more users and to a computer program product.

Such a method is known from Sarin et al., "A Process Model and System for Supporting Collaborative Work", *SIGOIS* Bulletin, 12 (2/3), p. 213-224. The method disclosed therein comprises decomposing a collaborative process into units of work, or tasks. Tasks have objects as input and output. The result is what is generally known as a workflow. The units of work can be assigned to people who will perform the work, when the workflow is executed.

The known method can be an effective way of creating a workflow. The automatic association of tasks with objects saves time and money during the scheduling process. However, the known method for creating a workflow takes insufficient account of the resources available for accomplishing various tasks. This can lead to a workflow in which people or machines wait idly for another task. Such a workflow results from a lack of insight into the way in which objects are mutually dependent. For example a product manual does not have to be printed and bound before translation can be started. It is sufficient that a finished text or part of the text has been agreed upon. The two tasks are, to a large extent independent of one another. They can be executed concurrently. Known methods for creating a workflow do not take account of the relation between constituent parts of a composite object.

It is an object of the present invention to provide a method for creating a workflow that makes more efficient use of available resources.

To this end, the method according to the present invention is characterised in that it comprises rearranging the tasks on the basis of the associated element type for creating parallel task-element combinations in the specific workflow.

Thus, the allocation of tasks to participants is performed in an effective and efficient manner. The resultant workflow allows greater concurrency of performance of tasks when it is later carried out.

In a first embodiment of the invention, the method comprises the step of checking the suitability of the general workflow for further use in the method.

Thus, a general workflow that has been modelled in a way that is unsuitable for rearranging can be filtered out at the start of the method. It can then be modelled differently, to ensure that the method leads to a satisfactory outcome.

In a particular preferred embodiment, the suitability of the general workflow is checked, by checking that branching paths in the general workflow split and join at tasks with the same associated element type, and that types associated with tasks in the paths are not higher in a type hierarchy than the types associated with the tasks where the branching paths split and join.

The method is primarily intended for use in programmable processing device, for instance a computer or automated processing equipment. It is therefore advantageous to us a suitable representation of object and workflow. To this end, the method comprises modelling the workflow as a Petri-Net, comprising places. which represent a task, transitions, and directed connections between places and transitions. Such a model of the workflow makes the method well suited to implementation in a computer program, for instance using object oriented programming techniques.

The programmable processing device according to the invention is characterised in that the means for generating a workflow make use of a method according to the invention.

The method will now be explained in further detail with reference to the enclosed drawings, of which:
- Fig. 1: shows a schematic diagram of an environment in which a workflow, involving one or more participants and obtained by the method of the present invention, can be used,
- Fig. 2: shows an element type structure for a composite object comprising elements to be used in creating an example of a workflow that can be executed in the environment of Fig. 1,
- Fig. 3: shows a flow chart comprising some steps in an embodiment of the method according to the present invention,
- Fig. 4: shows an application of the second step in the flow chart of Fig. 3, resulting in a general workflow for the group of coworkers of Fig. 1.
- Fig. 5: shows another example of a process model from which to create a general workflow for the group of coworkers of Fig. 1.
- Fig. 6: shows an example of a general workflow, created from the process model of Fig. 5 by modelling the process as a Petri-Net, which general workflow would be detected as unsuitable in a step in the method according to the present invention.
- Fig. 7: shows another example of a general workflow created from the process model of Fig. 5, wherein the general workflow is suitable for the method according to the present invention.
- Fig. 8: shows the application of a further step in the method of Fig. 3, in which the general workflow of Fig. 4 is rearranged,
- Fig. 9: shows the creation of a specific workflow in a further step in the method of Fig. 3, wherein the elements defined in a model of the composite object, based on the element type structure of Fig. 2, are associated with tasks comprised in the rearranged general workflow of Fig. 8,
- Fig. 10: shows the application of a further step in the method of Fig. 3 to the specific workflow of Fig. 9 in which the specific workflow is rearranged.

A workflow can be described as a schedule of a process in whole or part, during which objects, documents, information or tasks are passed from one participant to the other for action, according to a set of procedural rules. Almost any process or object can be incorporated in such a workflow.

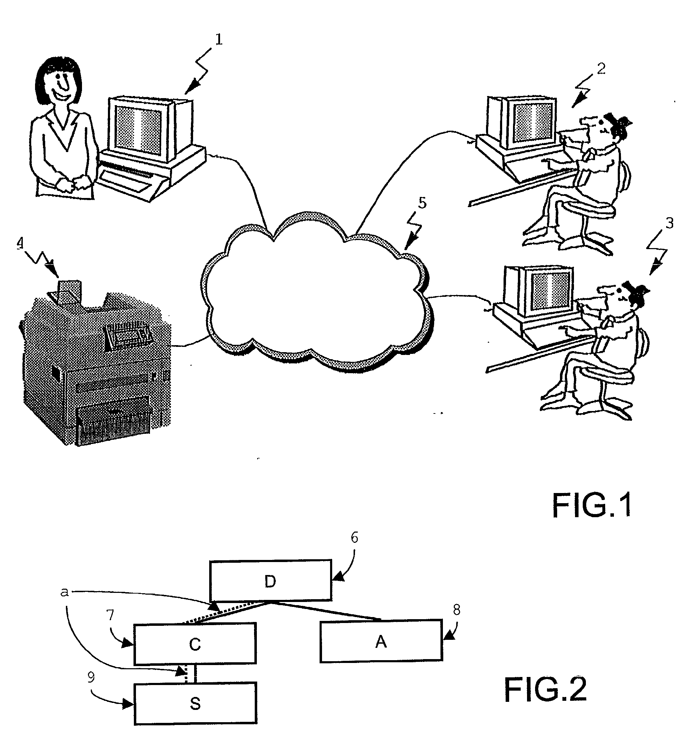

One example is the creation (the process) of a document (the object) by members of a group of coworkers 1-4, as illustrated in Fig. 1. They may possess different types of equipment and skills. For example, the first member may be the group leader 1. She could have at her disposal a computer with software for scheduling, making presentations etc. The second member could be a technical writer 2, located in the R&D centre. He may have at his disposal a word processor and CAD-system. His other coworker could be a translator 3, located in his native country, with a database and wordprocessor at his disposal. A print shop 4, where the finished versions of the document will all be printed, is represented by the printer.

The members 1-4 of the group are involved at different stages in the process. A workflow can be used to make sure that every member 1-4 of the group is involved at the right stage in the process, according to his or her capabilities. In the embodiment shown, the members 1-4 of the group are in contact with each other through a network 5. This could be the corporate intranet, some other local network, or maybe the internet.

The computer of one or more of these members 1-4 of the group of coworkers can be programmed to carry out the method according to the invention. This method will provide a rearranged workflow, which makes more efficient use of the members 1-4 of the group. The workflow created by this method can be used to monitor and control the group's process. In the situation just described, the invention is used to create a workflow wherein the time during which group members need to wait for each other, is kept to a minimum.

The sorts of workflow with which the invention is concerned, are those involving three entities: elements, a process model, or general workflow, and participants.

An element in a workflow created by the method of the invention has a certain type associated with it and a status. As an example, chapter one in a document would be of the type 'Chapter' and can have status 'written but not reviewed'. Page 12 in a booklet has type 'Page' and maybe the status 'printed but not sorted'.

Types are in a certain relation to each other, graphically modelled in an element type structure. Fig. 2 shows an example of an element type structure. This element type structure is adapted to the example situation of Fig. 1.

The method of the present invention uses element type structures that are directed acyclical graphs. This term describes the fact that the element types are in a hierarchical relation to each other. The element type at the top can be described as the parent of certain of the constituent element types, the children. A constituent element type can itself be the parent of a further 'child' element type. Attributes can be inherited from a parent by a child or passed by a child to a parent. A child cannot have more than one parent, but a parent can have more than one child. This ensures the acyclical nature of the element type structure.

The element type structure of Fig. 2 schematically represents the relation between various kinds of elements comprised in a document to be created by the (networked) members 1-4 of the group of coworkers in Fig. 1. Every model of the composite object comprises one root element, representing the composite object in its entirety. In this case, the type of the root element is 'Document' 6. An element of type 'Document' 6 is composed of a number of chapters and a number of appendices. Say there are twelve chapters, then each of these is of type 'Chapter' 7. Likewise, all appendices are elements with type 'Appendix' 8. The last two element types 7,8 are at a lower level in the hierarchy of the element type structure. Elements of these types 7,8 are child elements; together, they constitute a parent element of type 'Document' 6. The 'Document' 6 type is therefore at a higher level than the other two types 7,8 in the element type structure of Fig. 2. An element with a type at a lower level in the type structure can itself be made up of other elements. For example, chapter one in a document can comprise sections 1.1 to 1.5. Each of these sections is an element of type 'Section' 9. Because a group of elements of that type 9 make up an element of type 'Chapter' 7, the type 'Section' 9 is placed below the type 'Chapter' 7 in the element type structure of Fig. 2.

The element type structure is the same for all documents. The element type structure can therefore be used again when a workflow needs to be created for the production of further documents, even if they contain a different number of chapters.

The second entity to be defined at the start of the method is the general workflow, a model of the process. The general workflow is composed of a number of tasks. For instance, tasks in the creation of the document can be the writing of a section, the reviewing of a chapter, or the publishing of the document.

The general workflow is structured, i.e. tasks are interdependent. They cannot be executed in any random order. A chapter cannot be reviewed before its sections have been written; a page of text cannot be printed before the paper has been retrieved from the drawer.

Tasks may have attributes defining the type of element they work on, the state of the element at the start and the end of the task, and the skills or resources a participant n the process must have to carry out the task.

This brings up the third entity involved in a workflow: the participants. The concept of participants is used to refer to the resources needed to perform the tasks on the elements. It is advantageous to characterise participants by so-called roles, describing their capabilities.

Referring to Fig. 1, the group leader 1 might have the role 'reviewer'. The technical writer 2 will have the role 'writer'. The translator 3 has the role 'translator'. The print shop 4 has the role 'printer'. More than one user can have the same role; e.g. the group leader 1 could also have the role 'writer'. The group leader 1 would then have two roles, but the method according to the invention places no fundamental restriction on the number of roles a participant can have. Roles are merely a handy concept for preventing the use of inadequate resources to perform a task.

Although, in the example just described, almost all the participants are human, this need not be the case. The method according to the invention is equally suitable for creating a workflow in a plethora of different settings.

It is, for example, conceivable that the method be used to increase the efficiency of a manufacturing process, for example the assembly of a mechanical device. The participants would in such cases comprise the resources needed in the manufacturing process, e.g. the machines, tools, components and workers needed to assemble the device.

Another workflow could be a process in a computer, for example occurring in image processing. The composite object to be processed would be an image, comprising a number of elements. These could be characters, pixels, vectors, but also the properties of the image such as the contrast or depth of colour. Tasks might be the removal of blemishes, data compression, increasing the contrast, etc. Participants would in this case be the resources needed for image processing. These resources can comprise the software processes and the physical computing resources that limit the number of possible parallel processes.

The method according to the invention could also be used in situations where several workflows interact. Such workflows can be combined and then rearranged using the method of the invention, to improve the resulting aggregate workflow. An example of such a situation is a complex computing project involving several computers in a network, like the Internet. Software processes on the computers form the participants; the data to be processed is the composite object. Processes on the different computers affect each other. They can be combined into one aggregate workflow, which can then be rearranged using the invention, in order to make good use of the available processing capacity.

Although suitable for almost any kind of object, the method according to this invention is particularly suited for creation of a workflow using structured objects.

The method according to the present invention creates a specific workflow, containing combinations of tasks and associated elements. It is important to make a distinction between elements and element types. An element is an instance of an element type. There is a similar difference between a general workflow and a specific workflow. A general workflow relates tasks to element types, whereas a specific workflow combines tasks with elements. A general workflow can therefore be used for creating a second specific workflow for a second composite object with the same element type structure as the first.

As an example, the specific workflow might contain a combination 'write chapter/chapter three', or 'print black and white/page five'. The general workflow would contain combinations like 'write chapter'/'Chapter', 'print black and white'/'Page'.

The method according to the invention arranges the task-element combinations in such a way, that they are scheduled to be carried out in parallel as much as possible. Thus, 'write chapter/ chapter five' might be carried out in parallel to 'translate section/section 2.1'. 'colour print illustration page/illustration one on page five' might be carried out in parallel to 'print black and white /text block 1 on page 7'.

The coupling of participants to tasks is not part of the method according to the present invention. This coupling would take place during execution of the workflow.

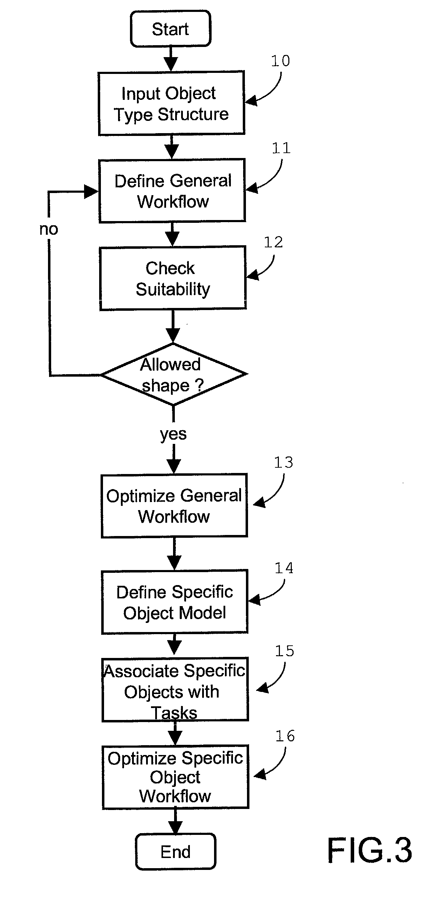

Some important steps in the method will now be explained in more detail, using the overview provided in the flow chart of Fig. 3.
In a first step 10, the element type structure is defined. This means the composite object is modelled as an aggregate of elements, each identified by their type. The relations between types are represented by the element type structures, as exemplified in Fig. 2.

Applied to the present example of creating a document, the first step 10 of the method will result in the element type structure of Fig. 2, discussed above.

Returning to Fig. 3, a second step 11 in the method involves defining the general workflow in terms of tasks and associated element types. The relation between the various tasks, primarily the order in which they can be executed, is defined at this stage. Only an element type is associated with each task, not an element.

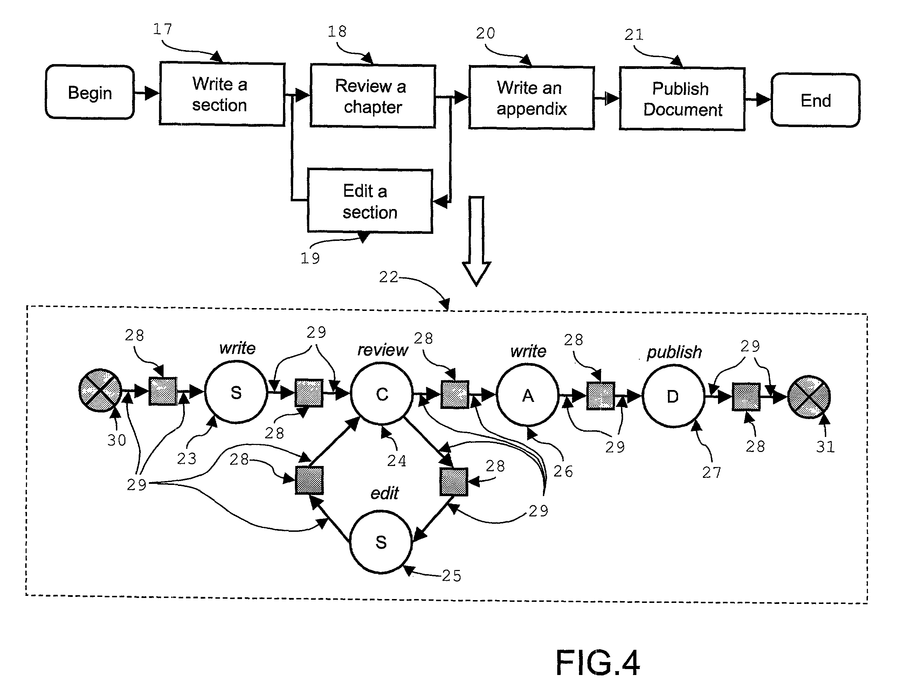

Fig. 4 shows the application of this step 11 in the method to create a workflow for the group members 1,-2,-3,-4 of Fig. 1. One task 17 in the process is the writing of a section. Subsequent upon this task 17, a task 18 of reviewing a chapter can be defined. An optional task 19 might be the editing of a section. Another task 20 would be the writing of an appendix. A final task 21 can be the publishing of the document.

In the method according to the present invention, a process is modelled as a Petri-Net, resulting in a general workflow 22. In the particular embodiment of invention here described, the tasks 17-21 are modelled as so-called places 23-27, respectively.

Like other Petri-Nets, the general workflow 22 further comprises transitions 28 between the places 23-27 and directed connections 29 between places 23-27 and transitions 28. Another embodiment of the method according to the invention is possible, wherein the tasks 17-21 are modelled as transitions. Mathematically, there is a duality between places and transitions, so the invention does not depend on the particular manner of representation chosen. For consistency, only the implementation wherein places represent tasks will be described here.

The directed connections 29 define the relation between the places 23-27, i.e. the order in which the tasks 17-21, which they represent here, can be executed. A transition 28, in the embodiment of the method described here, represents a checkpoint. The presence of checkpoints is important to the execution of the specific workflow, because the tasks represented by the places directly after a transition 28 can be executed only when all the tasks in the places leading to this transition 28 have been completed. The general workflow further comprises a starting point 30 and an end point 31, defining where execution of the general workflow 22 starts and at what point the general workflow 22 has been completed.

It is important to define the process with care. In particular the association of element types with places is an important aspect. Which element types are associated with the places partly determines the efficiency with which the created workflow can be carried out. For example, if the root element type is associated with all the tasks, then they will all need to be executed sequentially, leaving no scope for using the method to rearrange the workflow.

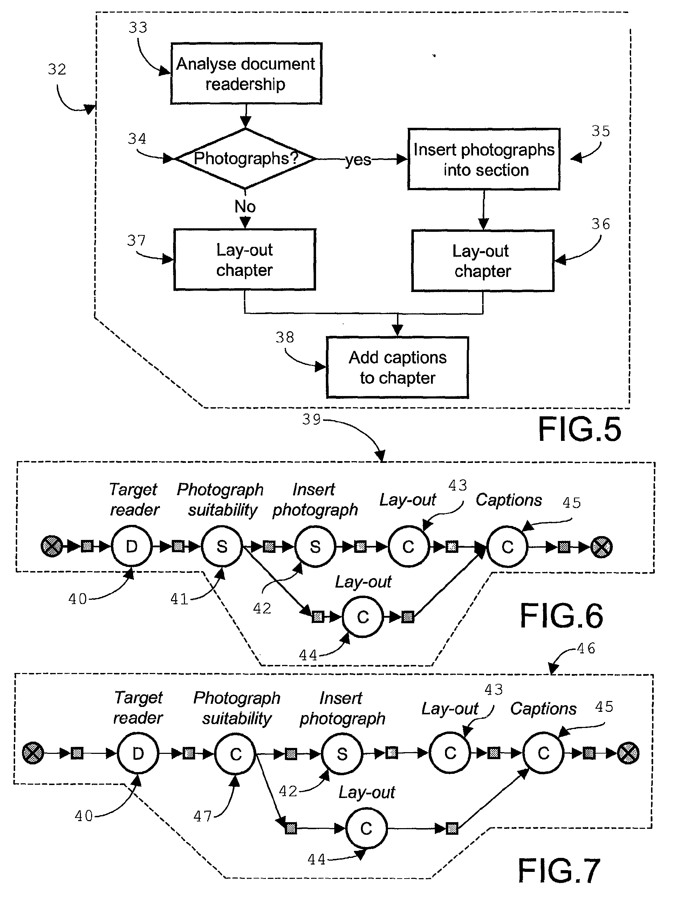

Additionally, certain kinds of general workflow comprising branching paths should be checked. Accordingly, a third step 12 in the flow chart of Fig. 3 comprises checking the suitability of the general workflow for further use in the method. This step will be explained with reference to Figs. 5, 6 and 7.

Fig. 5 shows a second example of a process model 32 from which to create a general workflow. Again, the process is intended for use by the members 1-4 of the group of coworkers in Fig. 1 and makes use of the element type structure of Fig. 2. Additionally, it comprises two branching paths, which in this case are conditional paths; some tasks are only to be executed when certain conditions have been met.

The process can be used in the creation of a manual. Rather than adding technical drawings as illustrations, it might be useful to add photographs, so a reader not versed in reading technical drawings can more easily recognise the parts of the product to which the manual refers.

A first task 33 in the process is to analyse the document's targeted readership. A second task 34 is to determine the need and suitability for photographs from the contents of the sections of the document. A section on how to contact product representatives does not need photographs, for instance. If a section is suitable for photographs, a task 35 would be to add photographs to a section. Afterwards, in another task 36 the layout of chapters should be reviewed, to check the text flow around the photographs. If it has been determined that no photographs should be inserted, a similar step 37 of reviewing the layout can be carried out straight away. Afterwards, a last step 38 in the process model 32 is to add captions to the photographs in the chapter and reference numerals to the text of the chapter.

A description of the process model 32 as given above could easily lead to the definition of a general workflow 39 as shown in Fig. 6. A first place 40 represents the task 33 of analysing the targeted readership. A second place 41 represents the task 34 of determining the need and suitability for photographs. In this general workflow 39, the type associated with the second place 41 is 'Section' 9. Depending on the outcome of the second place 41, the upper or lower branch of the general workflow 39 will be taken. The upper branch comprises places 42,43 representing the tasks 35,36 of inserting photographs into sections and reviewing the layout of a chapter respectively. The lower branch contains a place 44, which represents the task 37 of reviewing the layout of a chapter with no illustrations. The branches join at a last place 45, representing the task 38 of adding captions and reference numerals to a chapter.

This general workflow 39 contains an error, which would normally become apparent only during execution of a specific workflow created from it. In the method according to the present invention, this error would lead to problems in the later stages of creation of the rearranged workflow.

The problem lies in the type 9 associated with the second place 41. It is not the same as the type associated with the place 45 where the upper and lower branches of the general workflow 39 join together. Also, the type 7 associated with one place 43 in the upper branch is higher in the element type hierarchy than that 9 associated with the place 41 where the branches split.

According to the method described, the third step 12 in the flow chart of Fig. 3 comprises checking a general workflow with branching paths against two rules. Branches should split and join at places with the same associated type and types associated with places in the branches should not be higher in the element type hierarchy than the types associated with the places where the branches split and join.

Fig. 7 shows a general workflow 46 derived from the same process model 32 as the general workflow 39 of Fig. 6. This general workflow 46 would pass the test set in the third step 12 of the invention. The branching paths now originate from a place 47 with type 'Chapter' 7 associated with it.

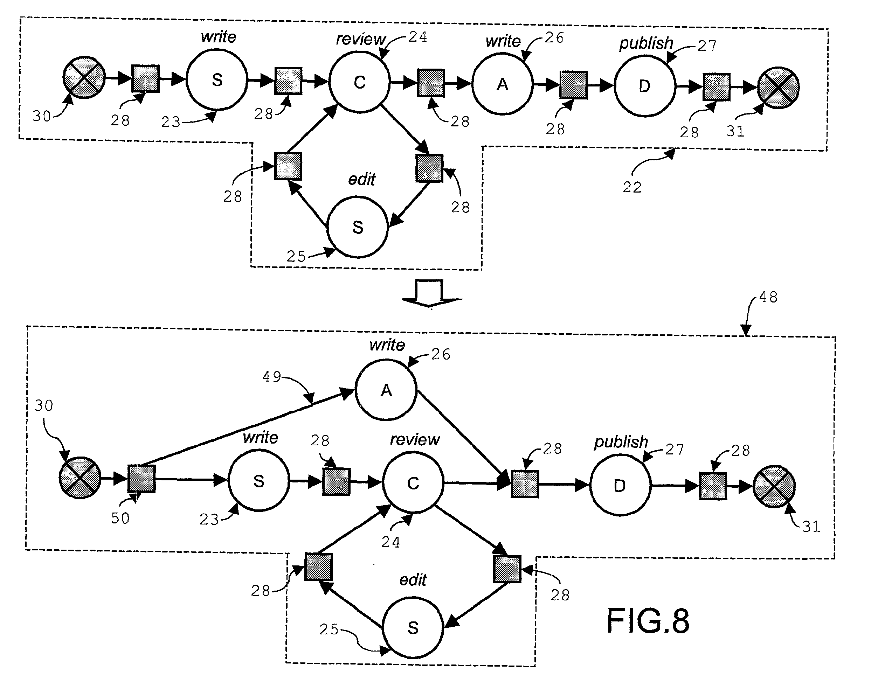

After the general workflow has passed the test comprised in the third step 12 of the flow chart of Fig. 3, a next step 13 in the shown embodiment of the invention is to rearrange the general workflow 22,39,46. Fig. 8 shows the application of this step 13 to the general workflow 22 of Fig. 4. This step 13 comprises determining for each transition 28 whether the starting points of directed connections 29 leading to it can be moved back (i.e. in a direction contrary to that of the directed connections), in order to increase the number of parallel places.

To do this, the method takes account of the interdependency between two element types in an element type structure. Two element types are interdependent if a path exists from the root element type at the top of the structure to an end point of a branch at the bottom level of the structure on which both element types lie. Referring to Fig. 2 for an example, the types 'Chapter' 7 and 'Section' 9 are interdependent, because they both lie on the dashed path labelled a.
If a transition occurs between two places with non-interdependent associated types, the directed connections between these places and the transition are broken and rearranged. The tasks represented by these two places will be scheduled to be executed concurrently instead of sequentially.

In the example of Fig. 8, the element type 7 associated with the place 24 representing the task 18 of reviewing a chapter and the element type 8 associated with the place 26 which represents the writing of an appendix, are not interdependent. Therefore, the directed connection leading to the transition between these two places 24,26 can be broken and moved back. It can be seen from the rearranged general workflow 48, that the result is a directed connection 49 between the first transition 50 and the place 26 representing the writing of an appendix. In the rearranged general workflow 48 of Fig. 8, the other places 23, 24, 25, 27 remain in the same position as in the original general workflow 22.

This step 13 in the method according to the invention embodies the realisation that writing an appendix is a task, which does not depend at all on the results of writing the sections of the chapters in the document.

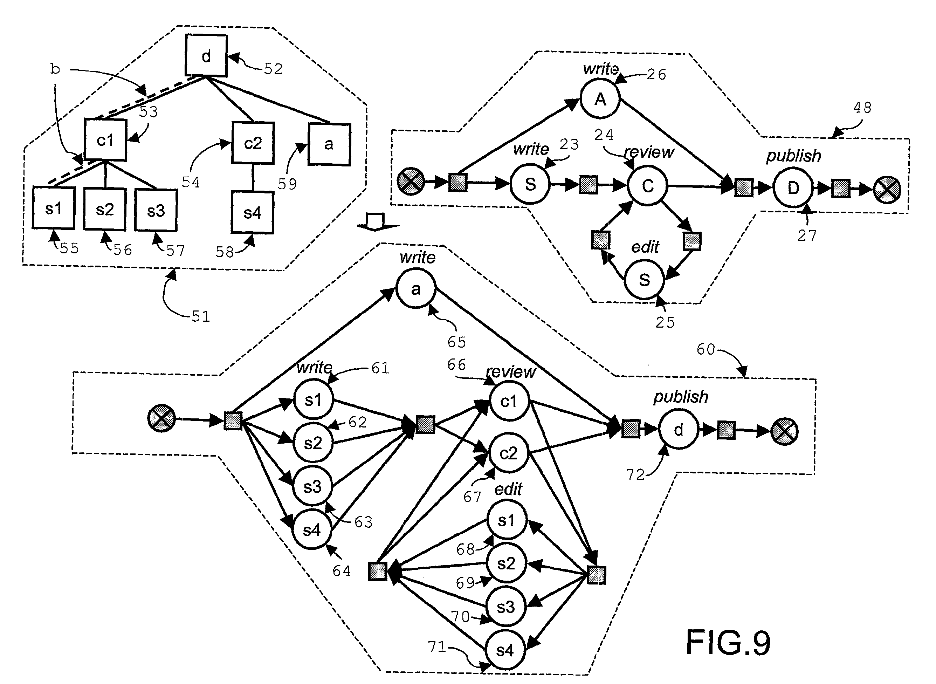

Two subsequent steps 14,15 in the method are depicted in Fig. 9, for the example of the production of a document by the group members 1-4 of Fig. 1.

In step 14, a model 51 of the composite object is defined. This is a model of the actual composite object involved in the workflow to be created. It consists of elements 52-59, which are instances of the element types 6-9 as defined in the element type structure.

Thus, in Fig. 9, the model 51 comprises the document 52 to be created, which is an instance of the type 'Document' 6. The document 52 of this example consists of chapters c1 53 and c2 54, both instances of type 'Chapter' 7. The document has an appendix a 59. Chapter c1 53 consists of sections s1 55, s2 56, s3 57. Chapter c2 54 contains only one section, section s4 58.

In the step 15 subsequent upon the step 14 just described, the elements 52-59 are associated with tasks, using the rearranged general workflow 48 of Fig. 8, in order to create a specific workflow 60. The specific workflow 60 is also a Petri-Net, consisting of places 61-72, transitions and directed connections between transitions and places. Whereas in the general workflow 48 each place 23-27 has an element type 6-9 associated with it, the places 61-72 in the specific workflow 60 are each associated with an element 52-59 in the model 51 of the composite object. The specific workflow 60 is created by making a copy of each place in the general workflow 48 for each instance of the type associated with the place, and by subsequently assigning an element with the type associated with the place to the created place. Extra directed connections are then added to connect the newly created places to the transitions.

In a last step 16 in the method according to the invention, the specific workflow 60 obtained in the previous step 15 is rearranged.

The concept of interdependency is used in this step 16, just as it is used for creating the rearranged general workflow 48. It is defined in the same manner as before, but now used in the context of the model of the object in terms of elements and not that of the element type structure. Two elements of a composite object are interdependent, when there is a directed path from the root element at the top of the object structure to an element at the lowest level in the structure, which passes through the two elements.

Referring to the model 51 of the composite object in Fig. 9, the elements c1 53 and s1 55 are interdependent, because these two elements 53,55 both lie on a directed path b from d 52, which is at the top level of the model 51, to s1 55, which is at the lowest level of the model 51.

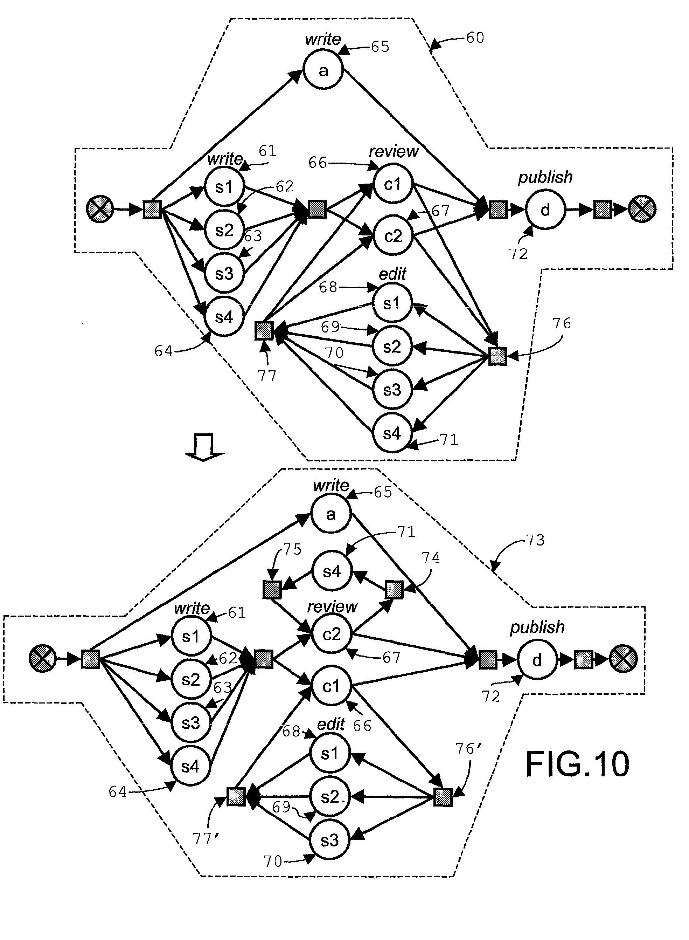

Fig. 10 depicts the application of the last step 16 in the method to the specific workflow 60 created in the example of the previous step 15. This last step 16 in the invention results in a rearranged specific workflow 73. Extra transitions are created for the rearranged specific workflow between two sequential places with interdependent associated elements, if all the output places of a transition have interdependent associated elements. Again, the result is to position places in parallel as much as possible.

For example, in fig. 10, the place 71 representing the editing of section s4 58 is differently connected in the rearranged specific workflow 73. The place 67 representing the reviewing of chapter c2 54 is also differently connected. The transitions 76,77 between the two places 67,71 in the sub-optimal specific workflow 60 have been split, resulting in two extra transitions 74 and 75 respectively. The fact that not all the elements 53,54 associated with the places 66,67 leading up to the transition 76 are interdependent with all the elements 55-58 associated with the places 68-71 to which the transition 76 leads, is a cue for splitting up the transition 76 into two transitions 74,76'. The directed connections between the places and the transitions are then rearranged.

This copying of transitions and rearranging of directed connections when not all elements associated with input places are interdependent with the elements associated with all output places, is done for each transition in turn in the sub-optimal specific workflow 60, finally resulting in the rearranged specific workflow 73.

Naturally, the invention is not limited to the described embodiments. It can be varied in a number of ways within the scope of the claims. In particular, the method can be applied in numerous different settings to create a workflow with increased parallelism, i.e. in automated production processes of goods, or in scheduler programs for groups of coworkers. Also, the order of steps in the method can be slightly varied without influencing the resultant workflow.

## Claims

1. Method for creating a workflow (73), comprising at least one structured process, with interdependent tasks, and a composite object, e.g. a report or manual, involved in the process, wherein the method comprises the steps of:
- defining a model (51) of the object, describing the composite object as an aggregate of constituent elements (52-59), wherein each element (52-59) is an instance of an element type (6-9);
- creating a general workflow (22, 39, 46) by modelling the process as a structured graph comprising tasks with an associated element type, connected according to their dependencies;
- associating tasks with elements (52-59) according to their type (6-9), to create a specific workflow (60) **characterised in that** the method comprises rearranging the tasks on the basis of the associated element type for creating parallel task-element combinations in the specific workflow (60).

2. Method according to claim 1, further comprising the step (12) of checking the suitability of the general workflow (22, 39, 46) for further use in the method.

3. Method according to claim 2, wherein the suitability of the general workflow (39, 46) is checked, by checking that branching paths in the general workflow (39, 46) split and join at tasks (41, 45, 47) with the same associated element type (7, 9) and that types (7, 9) associated with tasks (42-44) in the paths are not higher in a type hierarchy than the types (7, 9) associated with the tasks (41, 45, 47) where the branching paths split and join.

4. Method according to any one of the preceding claims, wherein the definition of the model (51) of the object comprises creating a directed acyclical graph, in which each element (52-59) is assigned a position depending on its type (6-9) and the relation to the other element types (6-9).

5. Method according to any one of the preceding claims, comprising the step (13) of rearranging the general workflow (22), by moving connections between two sequential tasks (24, 26) which can be carried out in parallel in view of their associated element type (7, 8), so as to schedule them to be carried out in parallel.

6. Method according to any one of the preceding claims, further comprising the step (16) of rearranging the specific workflow 60, by moving connections between two sequential tasks (66, 71), with associated elements (53, 58), which operate on elements that are not identical and have no encompassing or constituent elements in common.

7. Method according to any one of the preceding claims, wherein associating elements (52-59) with tasks to create a specific workflow (60) comprises making a copy of a task with associated element type in the general workflow (48) for each element of the appropriate type.

8. Method according to any one of the preceding claims, wherein the workflow is modelled as a Petri-Net, comprising places, transitions (28), and directed connections (29) between places and transitions (28).

9. Method according to claim 8, wherein tasks are represented as places.

10. Programmable processing device, comprising means for automatically generating a workflow and means for operation by one or more users (1-3), **characterised in that** the means for generating a workflow make use of a method according to any one of the preceding claims.

11. Computer program capable of running on a computer so that the computer running this program is capable of or adapted to carrying out one or more of the steps of a method according to any one of claims 1-9.

12. Computer readable medium having thereon a computer program code means, when said program is loaded, to make the computer execute a method according to any one of claims 1-9.
